# EUROPEAN PATENT APPLICATION

(11) **EP 2 501 021 A2**
(43) Date of publication of application: **19.09.2012**
(21) Application number: 12153454.9
(22) Date of filing: 01.02.2012
(51) Int. Cl.: H02K 11/00

(54) **Rotating electrical machine**

(30) Priority: 16.03.2011 JP 2011058552
(71) Applicant: Kabushiki Kaisha Yaskawa Denki, Kitakyushu-shi, Fukuoka 806-0004 (JP)
(72) Inventor: Matsuura, Kenji, Kitakyushu-shi, Fukuoka 806-0004 (JP); Matsumoto, Makoto, Kitakyushu-shi, Fukuoka 806-0004 (JP)
(74) Representative: Viering, Jentschura & Partner

(57) **Abstract**

A rotating electrical machine (1, 1A, 1B) includes a cylindrical housing (2, 2B) that houses a stator (7) and a rotor (8), and a position detector (9) that is mounted on an opposite-to-load side of a shaft (6) that rotates together with the rotor (8), the position detector (9) being configured to detect a rotational position of the shaft (6). The rotating electrical machine (1, 1A, 1B) includes a bracket (3, 3A, 3B) that is mounted on an opposite-to-load side of the housing (2, 2B), the bracket (3, 3A, 3B) being configured to support the shaft (6) such that the shaft is rotatable and the bracket (3, 3A, 3B) having an opening portion through which a wire (91) connected to the position detector (9) and a wire (73) connected to the stator (7) are led to the outside.

## Description

### BACKGROUND OF THE INVENTION

### 1. Field of the Invention

The present invention relates to rotating electrical machines.

### 2. Description of the Related Art

A rotating electrical machine including a position detector that detects the rotational position of the shaft of the rotating electrical machine has heretofore been available. The position detector is mounted to a shaft that rotates together with a rotor, on a side of the shaft (hereinafter referred to as an "opposite-to-load side") that is opposite to a side on which a load is disposed (hereinafter referred to as a "load side"). In this rotating electrical machine, a bracket that pivotally supports the shaft separates the interior space of the housing that houses a stator from a rotor therein and a space that houses the position detector.

This rotating electrical machine has an outlet port from which a lead wire connected to the position detector is led out of the rotating electrical machine, and another outlet port from which a lead wire connected to the stator is led out of the rotating electrical machine. These outlet ports are generally formed at different positions in the axial direction of the shaft and on both sides of the bracket (see Japanese Unexamined Patent Application Publication No. 2000-245094, for example).

However, reducing the size of the shaft of the available rotating electrical machine in the axial direction is difficult since multiple outlet ports for allowing the lead wires to be lead out to the outside have to be made at different positions in the axial direction of the shaft on both sides of the bracket.

### SUMMARY OF THE INVENTION

Accordingly, it is an object of the present disclosure to provide a rotating electrical machine in which a shaft that rotates together with a rotor can be easily reduced in size in the axial direction.

A rotating electrical machine disclosed herein includes a cylindrical housing, a position detector, and a bracket. The cylindrical housing houses a stator and a rotor. The position detector is mounted on an opposite-to-load side of a shaft that rotates together with the rotor. The position detector detects a rotational position of the shaft. The bracket is mounted on an opposite-to-load side of the housing. The bracket supports the shaft such that the shaft is rotatable, and has an opening portion through which a wire connected to the position detector and a wire connected to the stator are led to the outside.

According to an aspect of the rotating electrical machine disclosed herein, it is possible to provide a rotating electrical machine in which a shaft that rotates together with a rotor can be easily reduced in size in the axial direction.

### BRIEF DESCRIPTION OF THE DRAWINGS

Fig. 1 is a schematic longitudinal sectional view of a rotating electrical machine according to an embodiment;
Fig. 2 is a schematic diagram of a rotating electrical machine without a cover, when seen from an opposite-to-load side;
Fig. 3 is a schematic diagram illustrating the positions at which a first opening portion and a second opening portion are formed;
Fig. 4 is a schematic diagram illustrating the positions at which a first opening portion and a second opening portion according to a first modified example are formed; and
Fig. 5 is a schematic diagram illustrating the positions at which a first opening portion and a second opening portion according to a second modified example are formed.

### DESCRIPTION OF THE EMBODIMENTS

Referring to the attached drawings, embodiments of a rotating electrical machine of the present disclosure will be described in detail below. Note that the embodiments that are exemplarily illustrated below do not restrict the present disclosure.

### EMBODIMENTS

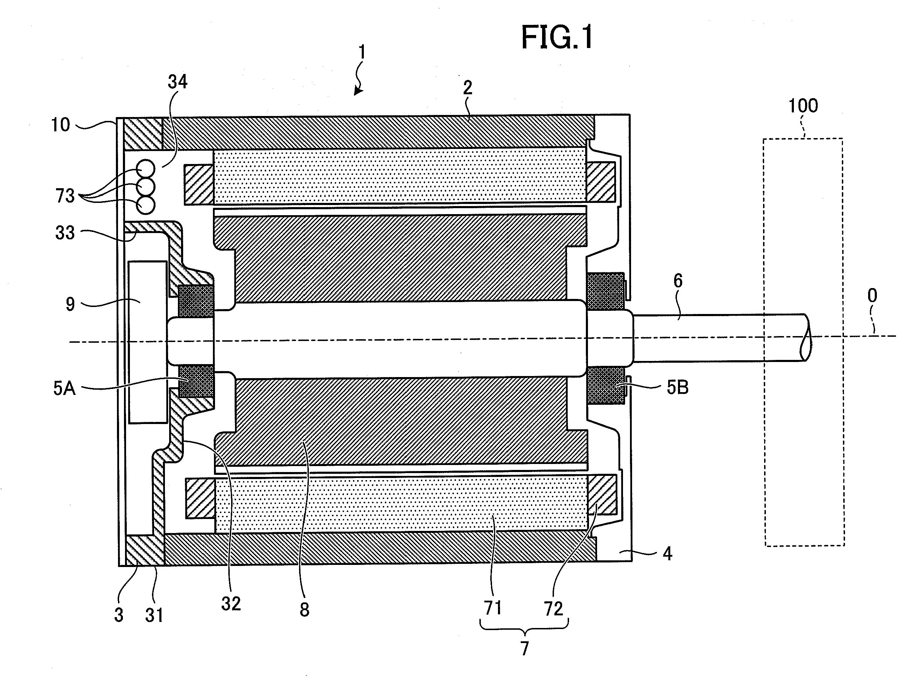

Referring to Fig. 1 first, a structure of a rotating electrical machine 1 according to an embodiment will be described. Fig. 1 is a schematic longitudinal sectional view of the rotating electrical machine according to the embodiment. As illustrated in Fig. 1, the rotating electrical machine 1 according to the embodiment includes a housing 2, brackets 3 and 4, bearings 5A and 5B, a shaft 6, a stator 7, a rotor 8, a position detector 9, and a cover 10.

The rotating electrical machine 1 is interlocked with an external device 100 via the shaft 6. Hereinbelow, a case is described where the rotating electrical machine 1 functions as a motor and the external apparatus 100 functions as a load for the motor.

The housing 2 is a cylindrical casing and houses the stator 7 and the rotor 8 therein. The load-side bracket 4 is mounted on an end portion of a load-side opening of the housing 2, and the opposite-to-load-side bracket 3 is mounted on an end portion of an opposite-to-load-side opening of the housing 2.

An outer circumferential portion of the load-side bracket 4 is attached to the end portion of the load-side opening of the housing 2, and an inner circumferential portion of the load-side bracket 4 holds the bearing 5B. An outer circumferential portion of the opposite-to-load-side bracket 3 (simply referred to as "bracket 3" below) is attached to the end portion of the opposite-to-load-side opening of the housing 2, and an inner circumferential portion of the bracket 3 holds the bearing 5A. The structure of the bracket 3 will be described below.

The shaft 6 is held by the bearings 5A and 5B so as to be rotatable about a rotational axis (simply referred to as an "axis 0", below). The stator 7 includes a stator core 71 and a stator coil 72, and is fixedly attached to an inner circumferential surface of the housing 2. The rotor 8 is arranged so as to be opposite the inner circumferential surface of the stator 7 with a gap therebetween. Here, the stator 7 may be molded out of a resin.

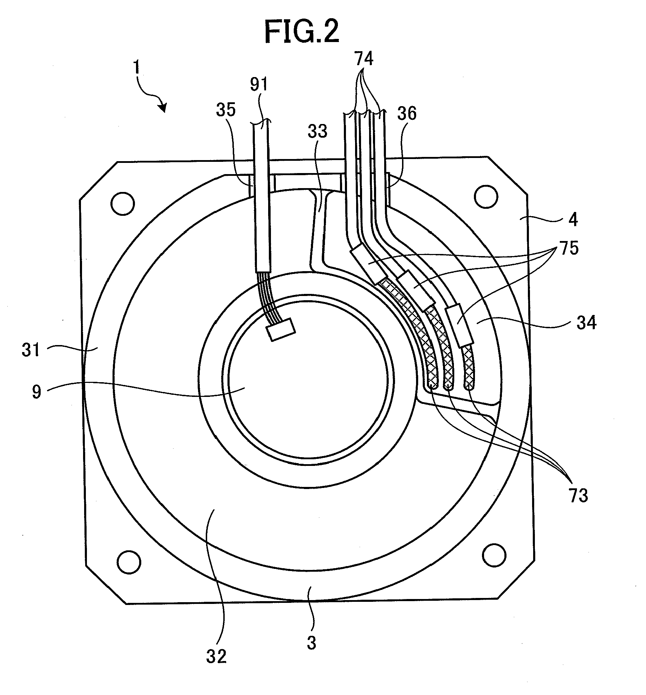

The stator 7 is connected to wires (referred to as "stator wires 73" below) that allow three-phase power for driving the shaft 6 to be provided to the stator 7. The layout of the stator wires 73 will be described below with reference to Fig. 2.

The rotor 8 includes a cylindrical rotor core and multiple permanent magnets mounted in the rotor core. The rotor 8 rotates about the center of the shaft 6, which is the rotational axis 0. For example, the rotor core is formed by stacking multiple thin plates, such as magnetic steel sheets, for reducing eddy currents. The rotor core allows magnetic fluxes of the permanent magnets to pass therethrough.

The position detector 9 is mounted on the opposite-to-load side of the housing 2 with the bracket 3 interposed therebetween. The position detector 9 is a rotary encoder, a resolver, or the like that detects the rotational position of the shaft 6. The position detector 9 is connected to a wire (referred to as a "detector wire 91" below) through which detected results related to the rotational position of the shaft 6 are output to a predetermined controller that is not illustrated (see Fig. 2). The layout of the detector wire 91 will be described below with reference to Fig. 2. The cover 10 is a closure member that closes an end face of an opposite-to-load-side opening of the bracket 3.

The rotating electrical machine 1 produces a rotating magnetic field on the inner side of the stator 7 by allowing an electric current to flow through the stator coil 72 of the stator 7. With interaction of a rotating magnetic field and a magnetic field generated by the permanent magnets of the rotor 8, the rotor 8 rotates and the shaft 6 rotates with the rotation of the rotor 8. When, on the other hand, the rotating electrical machine 1 is to function as a generator, the operation of the rotating electrical machine 1 would be opposite to that in the case of functioning as a motor. That is, when the shaft 6 rotates, the rotor 8 rotates with the rotation of the shaft 6, and an electric current is generated in the stator coil 72 of the stator 7.

Hereinbelow, the bracket 3 will be described further in detail. The bracket 3 includes an outer wall 31 and a bottom wall 32. The outer wall 31 serves as a circumferential surface of the rotating electrical machine 1 when attached to the end portion of the opposite-to-load-side opening of the housing 2. The bottom wall 32 faces an interior space of the housing 2. The bottom wall 32 has a hole in the center thereof through which the shaft 6 is inserted. The opposite-to-load-side end face of the bracket 3 is open. The open opposite-to-load-side end face is closed with the cover 10. The bracket 3 also includes an inner wall 33 that is located further inward than the outer wall 31. The bracket 3 houses the position detector 9 by use of the inner wall 33, the bottom wall 32, and the outer wall 31.

The bracket 3 also has a communication hole 34 in a portion of the bottom wall 32. The communication hole 34 is connected to the interior space of the housing 2. By allowing the stator wires 73 to be led out of the interior of the housing 2 to the outside through the communication hole 34, the rotating electrical machine 1 is easily further reduced in size in the axis 0 direction.

The bracket 3 is formed of a nonmagnetic material, a magnetic material, or a combination of a nonmagnetic material and a magnetic material. If the bracket 3 is partially or wholly made of a magnetic material, the bracket 3 has a magnetic shielding function of protecting the position detector 9.

Referring now to Fig. 2, the structure of the bracket 3 that allows the stator wires 73 to be led to the outside through the communication hole 34 will be described. Fig. 2 is a schematic diagram of the rotating electrical machine 1 without the cover 10 when seen from the opposite-to-load side.

As illustrated in Fig. 2, the bracket 3 includes the communication hole 34, which is connected to the interior space of the housing 2, in a portion of the bottom wall 32. The bracket 3 also includes a first opening portion 35 and a second opening portion 36 in the outer wall 31 that serves as the radially outer circumferential surface of the housing 2. The first opening portion 35 allows the detector wire 91 to be led out of the bracket 3 therethrough. The second opening portion 36 allows the stator wires 73 to be led out of the bracket 3 therethrough.

Thus, in the rotating electrical machine 1, the detector wire 91 can be led out of the bracket 3 through the first opening portion 35. Further, the stator wires 73 can be led out of the interior space of the housing 2 to the interior of the bracket 3 through the communication hole 34, and then further led out of the bracket 3 through the second opening portion 36.

In this manner, the rotating electrical machine 1 can be easily reduced in size in the axis 0 direction to a greater extent than the available rotating electrical machine in which opening portions for allowing the detector wire 91 and the stator wires 73 to be led to the outside are formed at different positions in the axis 0 direction and on both sides of the bracket 3.

The communication hole 34 of the bracket 3 forms a space that is separated by the inner wall 33 of the bracket 3 from the space containing the position detector 9. In other words, the space containing the position detector 9 is a space that is separated from the communication hole 34.

For this reason, in the rotating electrical machine 1, impurities such as dust can be kept from entering the space containing the position detector 9 from the interior space of the housing 2. Moreover, since the space containing the position detector 9 is separated from the communication hole 34 in the rotating electrical machine 1, heat generated in the interior space of the housing 2 can be kept from entering the space containing the position detector 9.

The communication hole 34 of the bracket 3 has an interior space that can house connectors 75, such as couplers, that connect wires 74 inserted from the outside of the second opening portion 36 to the stator wires 73 inserted from the interior of the housing 2.

In this manner, the wires 74 inserted from the outside of the second opening portion 36 and the stator wires 73 inserted from the interior of the housing 2 are connected to one another in the communication hole 34 of the bracket 3. Thus, the stator wires 73 can be led out of the bracket 3.

Thus, the communication hole 34 facilitates an operation for connecting the wires 74 and the stator wires 73 in the rotating electrical machine 1. In addition, since the stator wires 73 do not have to be excessively long, handling of the stator 7 is easy when the rotating electrical machine 1 is assembled.

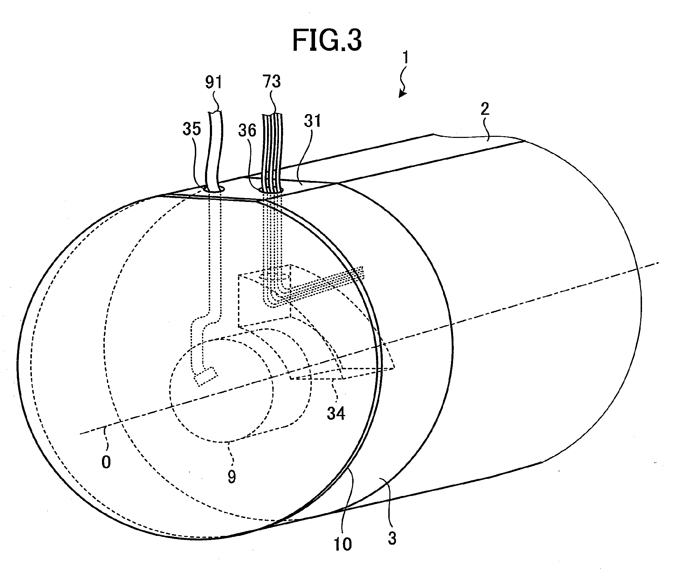

Referring now to Fig. 3, the positions at which the first opening portion 35 and the second opening portion 36 are formed will be described. Fig. 3 is a schematic diagram illustrating the positions at which the first opening portion 35 and the second opening portion 36 are formed. In Fig. 3, a structure is illustrated, for example, in which the stator wires 73 are directly led through the second opening portion 36, instead of a structure in which the stator wires 73 and the wires 74 inserted from the outside of the second opening portion 36 are connected in the bracket 3.

As illustrated in Fig. 3, in the rotating electrical machine 1, the first opening portion 35 and the second opening portion 36 are formed in the outer wall 31 of the bracket 3, which serves as the radially outer circumferential surface, so as to be arranged side by side in a direction that is orthogonal to the axis 0 direction of the shaft 6.

As described above, the rotating electrical machine 1 has the first opening portion 35 and the second opening portion 36 that are arranged side by side in the direction that is orthogonal to the axis 0 direction. Thus, the length of the bracket 3 in the axis 0 direction can be reduced to the minimum. Thus, the rotating electrical machine 1 can be easily reduced in size in the axis 0 direction.

Moreover, the first opening portion 35 and the second opening portion 36 are arranged to be close to each other as illustrated in Fig. 3. This arrangement enables the first opening portion 35 and the second opening portion 36 to be formed concurrently and easily or enables other operations.

In the rotating electrical machine 1, the detector wire 91 is led out of the bracket 3 through the first opening portion 36 formed in the outer wall 31 of the bracket 3. The stator wires 73 are led into the interior of the bracket 3 through the communication hole 34 formed in the bracket 3, and then led out of the bracket 3 through the second opening portion 36 that is formed in the outer wall 31 of the bracket 3 such that the second opening portion 36 and the first opening portion 35 are arranged side by side in the direction that is orthogonal to the axis 0 direction.

Although the first opening portion 35 and the second opening portion 36 are separately formed, one opening portion may be alternatively formed in the outer wall 31 of the bracket 3 in the rotating electrical machine 1 so as to allow the detector wire 91 and the stator wires 73 to be led to the outside therethrough.

Since the shape of the bracket 3 can be simplified with this structure, the production process of the bracket 3 can be simplified so that the production cost of the bracket 3 can be further reduced.

In the bracket 3 of the rotating electrical machine 1, a portion of the bottom wall 32 that faces the position detector 9 projects further into the interior space of the housing 2 than the other portion of the bottom wall 32 that does not face the position detector 9 (see Fig. 1). Thus, the position detector 9 can be positioned at a position that is closer to the interior space of the housing 2.

Thus, the rotating electrical machine 1 can be easily reduced in size in the axis 0 direction. The position detector 9 is contained in the bracket 3 in a space that is located further inward than the stator 7 in the radial direction of the bracket 3.

In this manner, in the rotating electrical machine 1, the portion of the bottom wall 32 of the bracket 3 that faces the position detector 9 can be made to project inward to the interior space of the housing 2 further beyond the opposite-to-load-side end face of the stator 7. Thus, the rotating electrical machine 1 can be further reduced in size in the axis 0 direction. In this case, the position detector 9 may be disposed at a position that is further inward from the housing 2 than the opposite-to-load-side end face of the stator coil 72.

As described above, the rotating electrical machine 1 according to the embodiment includes the bracket 3 that is mounted on the opposite-to-load side of the housing 2 and that supports the shaft 6 such that the shaft 6 is rotatable. The bracket 3 has the first opening portion 35 and the second opening portion 36 through which the detector wire 91 connected to the position detector 9 and the stator wires 73 connected to the stator 7 are led to the outside.

Thus, the detector wire 91 and the stator wires 73 can be led to the outside through the bracket 3 in the rotating electrical machine 1. In this manner, the rotating electrical machine 1 can be easily reduced in size in the axis 0 direction to a greater extent than the available rotating electrical machine in which opening portions for allowing the detector wire 91 and the stator wires 73 to be lead to the outside are formed at different positions in the axis 0 direction and on both sides of the bracket 3.

Although the housing 2 and the bracket 3 are formed separately in the embodiment described above, the housing 2 and the bracket 3 may be formed integrally. This structure can reduce the number of components and thus lead to a cost reduction.

In the embodiment described above, a case is described where the first opening portion 35 and the second opening portion 36 are formed in the outer wall 31 of the bracket 3 so as to be arranged side by side in the direction that is orthogonal to the axis 0 direction. However, the positions at which the first opening portion 35 and the second opening portion 36 are formed are not limited to these.

In the example illustrated in Fig. 3, the housing 2 has a generally cylindrical shape with a flat portion on the outer circumferential surface. However, the shape of the housing 2 is not limited to this. For example, the housing 2 may have a normal cylindrical shape without a flat portion on the outer circumferential surface.

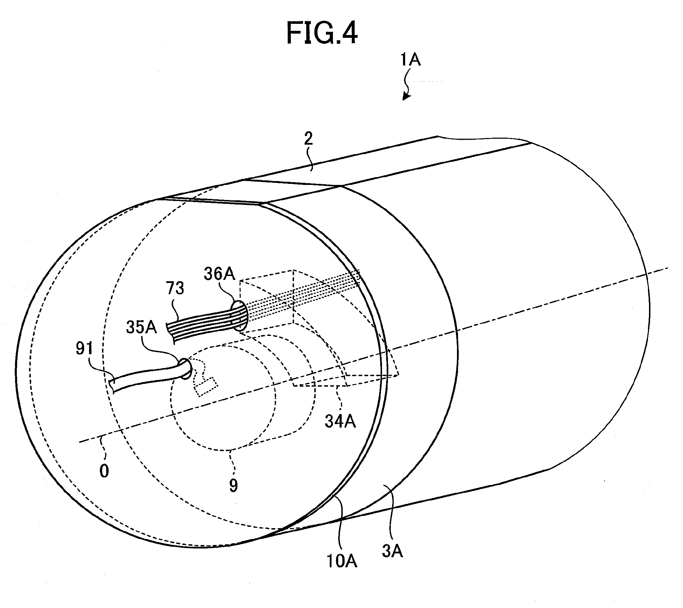

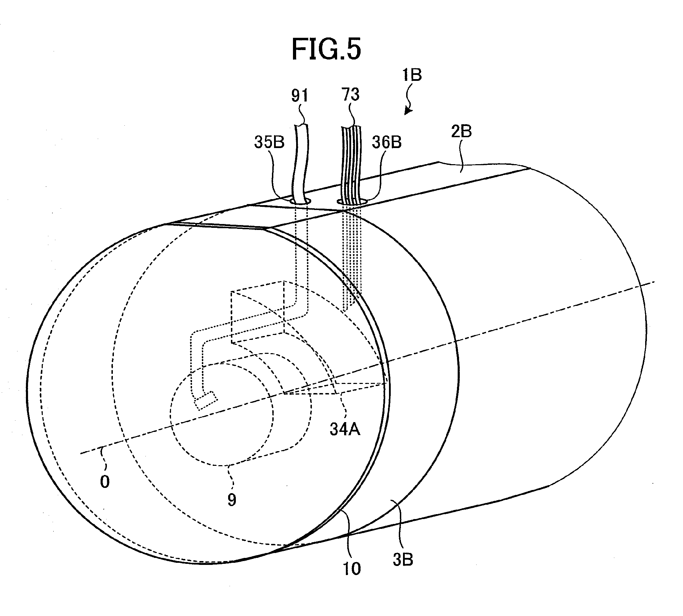

Referring now to Figs. 4 and 5, a description will be given of a first modified example and a second modified example in which the positions at which the first opening portion 35 and the second opening portion 36 are modified. Fig. 4 is a schematic diagram illustrating the positions at which a first opening portion 35A and a second opening portion 36A according to the first modified example are formed. Fig. 5 is a schematic diagram illustrating the positions at which a first opening portion 35B and a second opening portion 36B according to the second modified example are formed.

In Figs. 4 and 5, the same reference numerals are given to the components that are the same as those in the rotating electrical machine 1 illustrated in Fig. 3. Like Fig. 3, Figs. 4 and 5 each illustrate the case where the stator wires 73 are directly led through the second opening portion 36A or 36B.

As illustrated in Fig. 4, a rotating electrical machine 1A according to the first modified example includes a bracket 3A having a communication hole 34A that connects the interior space of the housing 2 and the opposite-to-load side of the bracket 3A. The rotating electrical machine 1A also includes a cover 10A that has a first opening portion 35A and a second opening portion 36A and that closes the open opposite-to-load-side end face of the bracket 3A.

Although not illustrated herein, the bracket 3A includes the inner wall 33, as does the bracket 3 illustrated in Fig. 2. The inner wall 33 separates the space housing the position detector 9 from the communication hole 34A.

In the rotating electrical machine 1A, the detector wire 91 is led out of the bracket 3A through the first opening portion 35A. The stator wires 73 are led from the interior space of the housing 2 to the inside of the bracket 3A, and then led out of the bracket 3A through the second opening portion 36A.

Also with this structure, the rotating electrical machine 1A can be easily reduced in size in the axis 0 direction to a greater extent than the available rotating electrical machine in which opening portions for allowing the detector wire 91 and the stator wires 73 to be led to the outside are formed at different positions in the axis 0 direction and on both sides of the bracket 3A.

As illustrated in Fig. 5, a rotating electrical machine 1B according to the second modified example has a first opening portion 35B and a second opening portion 36B in a circumferential surface of a housing 2B. Here, a cover 10 illustrated in Fig. 5 corresponds to the cover 10 illustrated in Fig. 3, and a bracket 3B corresponds to the bracket 3A illustrated in Fig. 4.

Although not illustrated herein, the bracket 3B includes the inner wall 33, as does the bracket 3 illustrated in Fig. 2. The inner wall 33 separates the space housing the position detector 9 from the communication hole 34A.

In the rotating electrical machine 1B, the detector wire 91 is led into the interior space of a housing 2B through the communication hole 34A, and then led out of the housing 2B through the first opening portion 35B formed in the outer circumferential surface of the housing 2B. The stator wires 73 are led out of the housing 2B from the interior space of the housing 2B through the second opening portion 36B formed in the circumferential surface of the housing 2B.

Also with this structure, the rotating electrical machine 1B can be easily reduced in size in the axis 0 direction to a greater extent than the available rotating electrical machine in which opening portions for allowing the detector wire 91 and the stator wires 73 to be led to the outside are formed at different positions in the axis 0 direction and on both sides of the bracket 3B.

Those skilled in the art can easily conceive of further effects or modifications. Thus, broader aspects of the present disclosure should not be limited to the specific details and the typical embodiments that are described as above in detail. Accordingly, the present disclosure can be modified in various ways without departing from the spirit or the scope of the general gist of the disclosure that is specified by the scope of claims and equivalents thereof.

## Claims

1. A rotating electrical machine (1, 1A, 1B) **characterized by** comprising:
a cylindrical housing (2, 2B) that houses a stator (7) and a rotor (8);
a position detector (9) that is mounted on an opposite-to-load side of a shaft (6) that rotates together with the rotor (8), the position detector (9) being configured to detect a rotational position of the shaft (6); and
a bracket (3, 3A, 3B) that is mounted on an opposite-to-load side of the housing (2, 2B), the bracket (3, 3A, 3B) being configured to support the shaft (6) such that the shaft (6) is rotatable and the bracket (3, 3A, 3B) having an opening portion through which a wire (91) connected to the position detector (9) and a wire (73) connected to the stator (7) are led to the outside.

2. The rotating electrical machine according to Claim 1, **characterized in that**
the opening portion includes a first opening portion through which the wire connected to the position detector is led to the outside, and a second opening portion through which the wire connected to the stator is led to the outside, and
the first opening portion and the second opening portion are formed in a radially outer circumferential surface of the bracket so as to be arranged side by side in a direction that is orthogonal to an axial direction of the shaft.

3. The rotating electrical machine according to Claim 2, **characterized in that** the bracket has a separate space that is connected to an interior of the housing and the second opening portion and that is separated from the position detector.

4. The rotating electrical machine according to Claim 3, **characterized in that** the separate space houses a connector that connects a wire that is inserted from the outside of the second opening portion and the wire that is connected to the stator and inserted from the interior of the housing.

5. The rotating electrical machine according to any one of Claims 1 to 4, **characterized in that** the position detector is housed in the bracket at a position that is closer to the housing than an end face of the bracket on an opposite-to-load side is.

6. The rotating electrical machine according to any one of Claims 1 to 5, **characterized in that** the position detector is housed in the bracket in a space that is located further inward than the stator in a radial direction of the bracket.

7. The rotating electrical machine according to any one of Claims 1 to 6, **characterized in that** the bracket and the housing are formed integrally.
